# EUROPEAN PATENT SPECIFICATION

(11) **EP 3 670 705 B1**
(45) Date of publication and mention of the grant of the patent: **02.02.2022**
(21) Application number: 18215423.7
(22) Date of filing: 21.12.2018
(51) Int. Cl.: C25B 1/04, C25B 3/26, C25B 15/08, F23L 7/00

(54) **CARBON DIOXIDE CONVERSION PROCESS**
VERFAHREN ZUR UMWANDLUNG VON KOHLENDIOXID
PROCÉDÉ DE CONVERSION DE DIOXYDE DE CARBONE

(43) Date of publication of application: 24.06.2020
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: COMBES, Gary, 60439 Frankfurt am Main (DE)
(74) Representative: Air Liquide

(56) References cited:
- WO-A1-2015/015433
- WO-A1-2017/102817
- WO-A1-2018/170243
- US-A1- 2014 291 162

## Description

The present invention relates to the reduction of carbon dioxide emissions by the conversion of carbon dioxide to useful compounds.

Carbon dioxide (CO₂) is one of the main greenhouse gases.

It enters the atmosphere mainly through the combustion of fossil fuels, of solid waste, of trees and wood products and also as a result of certain chemical reactions.

The current emissions of carbon dioxide into the atmosphere by far exceed the amount of carbon dioxide, which is absorbed from the atmosphere. Emission reductions of more than 80% would be required to reduce CO₂ levels in the atmosphere to what may be considered a more sustainable level. Process efficiency is a key driver in large-scale processes to assist in driving down CO₂ emissions.

Several considerations must be taken into account if a reduction of CO₂ levels in the atmosphere is to be successful. These considerations are both of a technical and a societal nature.

For instance, a key issue for reducing CO₂ emissions is finding a path that does not make the current infrastructures immediately redundant, as this would require the sacrifice of existing process plants and fuel systems at huge societal and further environmental costs. A second key issue is finding a path which is acceptable to the population concerned.

It is generally recognized that a significant part of achieving the reductions of CO₂ concentrations in the atmosphere and marine environments requires the world to move away from high-carbon energy and towards low-carbon power generation such as wind, tidal or solar energy, in combination with energy storage. This transition requires significant changes to existing infrastructures and already puts physical and financial pressures on large-scale grids, leading to fluctuations in grid stability that require windmills to be switched off at times.

It is also acknowledged that hydrocarbon based power generation will continue to be required for base loads of between 20-40%.

With respect to the CO₂ that continues to be generated as a waste product, Carbon Capture and Sequestration (CCS) can be used to avoid said CO₂ being released into the environment. However, CCS has a major inherent problem in that people do not want CCS sites in or near their local area nor CO₂ pipes passing through their neighbourhood. These problems arise in dense population and/or industrial areas, which is often where most CO₂ emissions are generated. This societal issue significantly limits the extent to which CCS can contribute to reducing CO₂ emissions in a practical and economic sense. To the extent that CCS does not reduce CO2 production, it can also not as such be considered a long-term solution.

Making effective use of generated CO₂ by Carbon Capture and Utilisation (CCU) could alleviate at least the sequestration problem. Conversion of CO*₂* to a carbon-based product is sensible for closing the carbon cycle, particularly if that carbon is locked away in a product, or in an energy-carrier, such as methane, and then used for power generation with renewed CO*₂* capture.

For example, it is known from WO-A-2015086148 to use at least part of the CO₂-containing blast-furnace top gas and/or steel converter gas to produce syngas with a composition specifically adapted for the production of chemical products in a downstream chemical synthesis process. In order to further reduce the carbon footprint of the plant, renewable energy sources are used to meet at least part of its energy requirements.

This known process, which is limited to steel and iron production, requires close proximity between the iron-producing plant and the chemical production plant and requires both to be in operation. It is only applicable to a limited number of sites. In addition, the syngas composition is specifically adapted to the requirements of the downstream chemical plant, which limits its exploitation potential.

WO 2018/170243 A1 discloses methods and systems for carbon dioxide hydrogenation.

WO 2017/102817 A1 discloses a method for generating carbon-based secondary energy carriers or basic chemical products.

In "A General Techno-Economic Analysis of CO2 Electrolysis Systems" by Matthew Jouny, Wesley Luc and Feng Jiao, Ind. Eng. Chem. Res., 19 January 2018, it is described how CO₂ can in principle be electrochemically reduced to produce gaseous products, such as carbon monoxide, methane and ethylene, or liquid products, such as formic acid, methanol, ethanol and propanol, which products may then be used or marketed.

US-A-2014/291162 disclosed a method for reclaiming the carbon gases resulting for example from the production of heating from carbon products (coal, wood, oil), or the incineration of waste, and to reduce in an optimal manner the production of greenhouse gases. Thereto it is proposed to treat the CO₂ and/or CO, obtained by the combustion of carbon products in a heating means, by electrochemical hydrogenation in order to obtain a CxHyOz-type compound, where x≧1; 0〈y≦(2x+2) and z is comprised between 0 and 2x. According to said method, heat is transferred from the heating means to a proton-conducting electrolyser such that said electrolyser reaches an operating temperature (T1) suitable for electrolysing steam. The CO₂ and/or CO produced by the heating means is fed at the cathode of the proton-conducting electrolyser. Steam is fed at the anode of the electrolyser. The steam is oxidized the anode and, after said oxidation, protonated species are generated in the proton-conducting membrane of the electrolyser. These protonated species are reduced on the surface of the cathode in the form of reactive hydrogen atoms. The CO₂ and/or CO are then hydrogenated on the surface of the cathode of the electrolyser by means of said reactive hydrogen atoms, thereby forming the abovementioned CₓH_{y}O_{z}-type compounds. By supplying these CₓH_{y}O_{z}-type compounds to the heating means, the external input of carbon products into the heating means can be reduced. WO-A-2015/015433 disclosed a process for the conversion of a carbonated load into synthesis gas consisting mainly of hydrogen and carbon monoxide.

Said comprises the oxycombustion of the carbonated load for the cogeneration of electricity and heat.

Co-electrolysis of water and carbon dioxide at high temperature, using the heat, electricity and carbon dioxide generated in the oxycombustion step.

The thus obtained reaction products may be subjected to cleaning and separation so as to extract hydrogen and carbon dioxide therefrom. The remaining carbon dioxide may be returned to the co-electrolysis step.

The cleaned synthesis gas consisting of CO and H₂ may be used in the synthesis of products such as gaseous or liquid fuels or chemical synthesis, such as, inter alia, methanol. When the Fischer-Tropsch process is used to produce liquid fuel from the synthesis gas, the head gass, which mainly consists of CH₄, can be supplied to the oxycombustion step or, in addition to the water and the CO₂, to the co-electrolysis step.

An advantage of electrocatalytic conversion of CO₂ is that, compared to alternative processes of CO₂ utilisation such as high temperature Reverse Water Gas Shift (RWGS), electrocatalytic conversion can be completed at relatively low temperatures of <120°C.

In spite of the above, electrochemical processes remain highly energy consuming, so that, thus far, reducing CO₂ emissions by means of electrocatalysis is only envisaged when the required electricity is provided at acceptable cost by low-carbon renewable power, such as wind and solar energy. In addition, selectivity towards the desired product is limited, so that known electrochemical processes come with complex product separation and purification systems and/or the disposal of significant amounts of waste products.

In addition, all of these catalytic conversion processes face the simple reality that no catalyst lasts indefinitely in terms of reaction rate or selectivity performance, with a decline in selectivity for the desired product being observed over time. This produces complexity for process design, waste stream treatments and satisfying market needs, without sacrificing process efficiency. A process that can flexibly handle varying product selectivity is difficult to design and operate in a viable manner.

The Faradaic Efficiency (FE) and selectivity of electrochemical processes are difficult to sustain at the high levels whilst at economically viable rates (current densities) over an extended durations of years. In a paper by Zhang et al., {Adv. Sci. 2018, 5, 1700275 pg1-24}, a review of current state of the art for CO₂ conversions to molecules more complex than CO demonstrates the difficulty to deliver high FE of >50% and simultaneously high current densities of >100mA/cm² and low over-potentials by the absence of any results satisfying this criteria. This is not stating that high current densities with high selectivity cannot be achieved, but that the process remains challenging. These processes would therefore suffer from high capital costs as a result of both the high over-potentials combined with low current densities and the poor selectivity resulting in significant waste product stream treatment costs. The OPEX cost would also be high requiring more electrical power for both the electrocatalysis and subsequent downstream purification when low FE is achieved, leading to a low process efficiency.

Electrocatalysis as proposed to address CO₂ emissions requires large amounts of low carbon renewable power from principally wind and solar sources. In order to facilitate this, it is likely that sources of wind and solar power remote from population centres will be required. For example, solar is best located in deserts, which may be physically remote from the main population centres. This low carbon renewable power that is remote from and not linked directly through cable to population centres is termed "stranded" renewable power. A location that is similarly remote from and not linked directly through an energy network and in particular an electrical cable network to population centres is termed "stranded" location.

In summary, electrocatalytic conversion of CO₂ at large scale for CCU purposes faces the twin challenge of achieving critical electrocatalytic performance and its integration into a process design that can offset major issues associated with renewable power supply fluctuations and varying product selectivity with time onstream.

It is an aim of the present invention to provide an improved environmentally friendly process in which CO₂ is transformed into staple molecules which are commonly used as starting products in chemical synthesis processes and/or which can be used as a vector for energy storage or transport.

In addition, it is an aim to provide a process which can address major operational issues, as discussed above, with large scale electrolysis using predominantly renewable energy. Thereto, the present invention provides a CO₂ conversion process whereby CO₂ and water are supplied to an electrocatalytic unit having at least one cell, comprising a cathode chamber and an anode chamber. The water is typically demineralized water.

According to the invention, oxygen is produced in the anode chamber and, in the cathode chamber, a C1 or C2 hydrocarbon target compound is produced with a Faradaic Efficiency (FE) of at least 45%. The C1 or C2 target compound is more specifically selected from the group consisting of methanol, ethanol and ethylene.

Suitable electrocatalytic processes for the production of methanol, ethanol or ethylene from CO₂ and water in the context of the present invention are available and known in the art. By way of example, reference can again be made to the article by Matthew Jouny, Wesley Luc and Feng Jiao and the articles by Song et al. in Chemistry Select, 2016, 1, 1 -8 and in Angewandte Chemie Int. Ed., 2017, 56, 10840-10844. In particular, the two articles by Song et al. demonstrate that carbon selectivity to ethanol of more than 45% FE to the stated maximum of 75% FE are achievable through variation of applied voltage.

According to the invention, the target compound is evacuated from the cathode chamber in a product stream, referred to as first product stream, which comprises:
(i) water
(ii) target compound and
(iii) a mixture containing at least unconverted carbon dioxide and hydrogen.

The generated oxygen, on the other hand, is evacuated from the anode chamber as part of a second product stream.

Target compound is extracted from the evacuated first product stream after which the extracted target compound can be conditioned, stored, transported, used as raw material in a chemical synthesis process and/or as an energy vector. The first product stream from which target compound is thus removed is referred to as the "depleted first stream".

The process according to the invention is further optimized in that, after extraction of target compound from the first product stream, a first part of the mixture present in the remaining depleted first product stream and a first part of the oxygen from the second product stream are fed to a combustor. In said combustor said first part of the mixture is combusted using said first part of the oxygen as a combustion oxidant. Said combustion typically takes place at temperatures above 950°C, more preferably above 1050°C, whereby said temperature corresponds to the temperature of the fumes leaving the combustor..

It is to be noted that the "first part" of the gas mixture present in the depleted first stream may correspond to only part of or to all of the gas mixture present in said depleted first stream after extraction of target compound.

Similarly, the "first part" of the oxygen from the second product stream may correspond to only part of or to all of the oxygen present in the second product stream.

In addition, the "first part" of the gas mixture present in the depleted first stream may be fed to the combustor in the form of the corresponding fraction of the depleted first stream.

Alternatively, the "first part" of the gas mixture present in the depleted first stream may be fed to the combustor in a more or less purified form, i.e. after further components (such as water, hydrogen, etc.) have been removed from the (corresponding fraction of) the depleted first stream.

Similar considerations apply to the "first part" of the oxygen from the second product stream which is also fed to the combustor.

The combustion in the combustor generates thermal energy and fumes, whereby the fumes consist of at least 98 %vol of CO₂ and water.

Thermal energy generated in the combustor is recovered for subsequent use, thereby increasing the energy efficiency of the process.

At least part of the CO₂ from the fumes generated in the combustor is furthermore fed to the electrocatalytic unit for conversion to the target compound as described above. According to a preferred embodiment of the invention, at least 99%vol and preferably all of the CO₂ from the fumes generated in the combustor are fed to the electrocatalytic unit for conversion therein.

In addition to converting CO₂ to a useful target compound, the conversion process according to the present invention thus presents multiple further advantages.

It has an improved energy efficiency in that it includes energy generation by combustion using products generated by the process itself.

As the CO₂ generated by said combustion is sent to the electrocatalytic cell, no additional CO₂ emissions to the environment or negligible quantities thereof are generated by said combustion. By using oxygen, rather than air, and in particular oxygen generated by the conversion process as combustion oxidant, NOx generation by the combustion step is reduced or avoided. NOx is a significant Green House Gas contributor. In addition, in this manner the energy in the form of the electricity consumed by the electrocatalytic cell for the production of oxygen is partially recovered.

In that the inherently arising carbon-containing side products of the electrocatalytic conversion process, if not extracted for use elsewhere, are transformed back to CO₂ in the combustor, the separation/purification part of the conversion process is simplified and reduced and the disposal of side products as waste is diminished or avoided.

As a consequence, in spite of the inherently limited selectivity of the electrocatalytic conversion processes for the target compound, the present invention provides a more efficient and more environmentally friendly way of converting CO₂, which would otherwise be emitted into the environment, into a useful target compound.

Methanol and ethanol are preferred target compounds.

Ethanol is a particularly preferred target compound. Ethanol is a compound of versatile function to both the chemicals (for example when dehydrated to ethylene) and the fuels market. It is well suited to existing infrastructures and can be safely transported and stored.

Target compound methanol is more suited to the chemical industry as a feedstock, such as for the Methanol-to-Propylene (MTP) or Methanol-to-Olefins (MTO) processes or for methanol to aromatic processes, or even for the production of syngas from methanol reforming. The invention thus enables these methanol conversion processes to benefit from a lower carbon footprint methanol feedstock in order to reduce the overall carbon footprint of these processes. As an additional environmentally friendly measure, water present in the fumes from the combustor can, at least in part, be condensed and fed to the electrocatalytic unit. This limits make-up water demand and purification needs, thus offering further process efficiency and environmental savings. Whereas such a measure is generally desirable, it is a particularly useful measure when the carbon dioxide conversion process is conducted in an area with limited access to water suitable for use in an electrolysis process.

Similarly, aqueous streams generated by purification and/or dewatering of product streams of the electrocatalytic conversion process are preferably recycled to the electrocatalytic cell, if necessary after additional purification/demineralization.

In a demineralization plant, impurities can be removed from the water so as to avoid the potential accumulation thereof in the process.

The separation of, for example, the first product stream evacuated from the cathode chamber into respectively a liquid fraction and a gaseous fraction can be conducted by means of one or more membranes, by means of a gas/liquid separation vessel/column or a combination thereof. Water thus removed from the first product stream evacuated from the cathode chamber may, at least in part, be returned to the electrocatalytic unit, preferably to the cathode chamber, with the addition of rebalancing electrolyte or fresh water as required.

Similarly, water removed from the second product stream evacuated from the anode chamber may, at least in part, be returned to the electrocatalytic unit, preferably to the anode chamber, again with the rebalancing of the electrolyte or fresh water as required.

Advantageously, at least part of the thermal energy generated in the combustor is recovered and converted into mechanical and/or electrical power. In order to reduce the energy requirements of the process of the invention, said mechanical and/or electrical power can be supplied back to the process. Preferably, the recovered thermal energy is at least in part and preferably as a whole converted in electrical power. Said electrical power can be put to use in several aspects of the process of the invention, in particular as an electricity source for the electrocatalytic conversion itself.

Depending on the composition (which may vary over time) and amount of the first part of the gas mixture which is supplied to the combustor for combustion therein, additional fuel and/or additional oxygen (i.e. fuel and/or oxygen not generated by the electrocatalytic conversion) may be supplied to the combustor to ensure combustion therein. Similarly, additional fuel and/or additional oxygen may be supplied to the combustor to generate additional energy for the conversion process, in particular when the availability of low-carbon/renewable energy is low (see below).

When additional fuel is supplied to the combustor, said additional fuel is advantageously a low sulfur-fuel, i.e. a fuel with <1ppm per volume S, preferably a low-sulfur gaseous fuel. The fuel used may be an originally low-sulfur fuel or a low-sulfur fuel obtained by desulfurizing a fuel with a higher S content. Using low-sulfur fuel minimizes sulfur compounds from entering into the process, which can present potential risks of corrosion or inhibition or poisoning of the CO₂ conversion process.

Natural gas, consisting of at least 80%vol methane, preferably >90%vol methane, is a particularly preferred additional fuel. As indicated above, said natural gas may be a desulfurized natural gas.

Electric power consumed by the CO₂ conversion process and not generated by the process itself is preferably at least in part generated by low-carbon/renewable energy sources, more preferably in its entirety, thereby reducing the carbon footprint of the conversion process. Suitable renewable energy sources are, for instance, hydro-, tidal, wind and solar energy.

In addition to CO₂ from the fumes generated in the combustor, CO₂ from other sources is advantageously supplied to the electrocatalytic unit, said additional CO₂ being typically generated as a by-product of industrial processes. Indeed, it is a purpose of the process according to the present invention is to be able to convert CO₂ generated by other activities in an efficient and environmentally friendly manner into a useful compound.

Industrial processes generating CO₂ at concentration levels ranging from 30-100 %vol are preferred CO₂ sources for the conversion process of the present invention. Specific examples of such sources of concentrated CO₂ are thermal energy plants, iron- or steelmaking installations such as blast furnaces, cement producing plants and certain chemical production processes such as ethylene oxide production.

The CO₂ conversion process may take place in the vicinity of such CO₂ sources. Alternatively, the additional CO₂ may be supplied by tankers or pipeline to a stranded location.

After target compound has been extracted from the first product stream which has been evacuated from the cathode chamber, the extracted target compound is typically further concentrated and purified, in particular by the partial or total removal of water (vapour) and/or unconverted CO₂ therefrom.

The depleted first stream, i.e. the first product stream from which the target compound has been extracted, may be subjected to one or more steps of compression, cooling and/or drying before said depleted first stream is passed through a separation process whereby CO₂ is largely removed from the other volatile gases, to a purity of >95%, more preferably >98%.

In the event that target compound is ethylene, a cryo-distillation process is most likely required to remove the CO₂ from the ethylene and the other gases. A hot caustic wash to remove CO₂ from the first product stream prior to target compound extraction may also be advantageous if the target compound is ethylene.

Oxygen is a further valuable compound generated by the process. It is present in the second product stream which has been evacuated from the anode chamber. Any oxygen which is not supplied to the combustor can be extracted from said second product stream and thereafter advantageously concentrated and purified, in particular by the partial or total removal of water (vapour) therefrom, conditioned, stored, transported and/or used as an oxidant in a different process.

The separation of the second product stream from the anode chamber into an aqueous liquid phase and gaseous oxygen-containing phase may be performed using a membrane, mechanical gas/liquid separation, etc. or a combination of multiple separation methods.

Naturally, such a concentration and purification step may also be applied to the oxygen of the second product stream which is fed to the combustor.

The combustor is operated in such a way as to keep the levels of compounds, other than water (vapour) and CO₂, such as in particular NOx, in the generated fumes to a minimum.

One way of achieving this goal is to operate the combustor with oxy-combustion, i.e. with a combustion oxidant consisting essentially (for at least 90%vol, more preferably for at least 95%vol) of oxygen molecules. However, due to the properties of oxy-combustion, this typically requires specifically adapted combustion equipment.

An alternative way of keeping the levels of compounds other than water and CO₂ in the generated fumes to a minimum is to operate the combustor using so-called "synthetic air" as combustion oxidant, i.e. a gas other than ambient air, but having an oxygen content close to that of ambient air (namely between 16 and 25%vol, preferably between 18 and 23 %vol) and further consisting essentially of compounds which, upon combustion in the combustor, will, in the case of complete combustion, yield only water (vapour) and/or CO₂ in the fumes of the combustor. Such compounds naturally include carbon monoxide and hydrogen, but also water (vapour) and carbon dioxide as such, which do not participate in the combustion reaction. In such an embodiment, combustion material which is suitable for combustion with ambient air can also be used for the combustion process in the combustor, thus reducing material costs. According to a preferred embodiment of the process according to the invention, after extraction of target compound from the first product stream, the gas mixture from the depleted first stream is separated into:
(a) a CO₂ enriched fraction (i.e. a fraction having a higher CO₂ concentration than the depleted first stream but before said separation) and
(b) a CO₂ depleted fraction (i.e. a fraction having a lower CO₂ concentration than the depleted first stream before said separation).

At least part of the CO₂ enriched fraction is mixed with the first part of the oxygen from the second product stream to form a combustion oxidant, preferably having an oxygen concentration of between 16 and 25%vol, more preferably between 18 and 23%vol.

Said combustion oxidant and the CO₂ depleted fraction are then supplied to the combustor for combustion therein.

The separation of the gas mixture into a CO₂ enriched fraction and a CO₂ depleted fraction is preferably conducted by cryogenic separation, though other separation methods, such as membrane separation methods, may also be used.

A fraction of the CO₂ enriched fraction may also be sent, as an internal CO₂ recycle (denoted as WIR), back to the electrocatalytic unit as a source of CO₂, without first being sent to the combustor. The latter embodiment can in particular be useful when the separation into the CO₂ enriched fraction and the CO₂ depleted fraction is such that the CO₂ enriched fraction consists mainly, in particular for at least 80%vol, preferably for at least 90%vol and more preferably for at least 95%vol, of CO₂ and water or of CO₂.

Hydrogen, which is typically also produced in the cathode chamber together with the target compound, is a valuable product which, depending on the circumstances, can be commercialized and/or be put to better use than being combusted in the combustor. It may therefore be useful to extract not only the target compound, but also hydrogen from the first product stream and to supply to the combustor a first part of the mixture of the depleted first stream which consists of a hydrogen-depleted fraction of said gas mixture. Hydrogen extraction can, for example, be achieved with membrane technology.

Hydrogen extraction from the first product stream, as described above, may also be useful for controlling the combustion properties and more particularly flame stability in the combustor.

As indicated earlier, at least part of the thermal energy generated in the combustor is advantageously recovered and converted into mechanical and/or electrical power. For this purpose, the combustor is advantageously integrated in a power generation cycle, in short: power cycle.

The power cycle is preferably an oxy-combustion power cycle using CO₂ as the working fluid in the power cycle rather than the more conventional use of water/steam as the working fluid. Examples of suitable CO₂-based power cycles include the Semi-Closed Oxy-Combustion Combined Cycle (SCOC) and the more recent Allam Cycle. It is believed in this respect that oxy-combustion power cycles that feature recycling of CO₂ offer the most efficient form of delivering CO₂ ready for CCS with reduced efficiency penalties in particular as regards compression.

According to a preferred embodiment, the combustor is operated under oxygen (O₂) lean conditions so that no O₂ is returned to the electrocatalytic process. In that case, non-combusted CO is present in the fumes from the combustor. The CO content of the outlet stream from the gas turbine used for power generation from the combustor fumes should be <0.008 mole fraction (wet), preferably <0.007 and most preferably ≤0.005 for a turbine outlet Pressure <40 bar to avoid the potential for entering a metal dusting regime as the gas is cooled.

When O₂ is present in the fumes leaving the combustor (at levels <2%vol, more preferably <1%vol O₂) said fumes are advantageously passed through a catalytic oxidation process, before the resulting CO₂ stream is returned to the cathode chamber of the electrocatalytic unit.

The ability to design the power system to run either slightly lean in O₂ and/or with an excess of O₂ is valuable. It avoids the issue of metal dusting on cooling down of the fumes from the combustor. The removal of excess O₂ in the that part of the fumes being returned from the combustor to the electrocatalytic process enables the further beneficial utilisation of the first product stream from the cathode chamber to recover more process heating energy for heating or power. Moreover, any unoxidized traces of CO or hydrocarbon will not be detrimental if entering the electrocatalytic conversion process, which is hereafter referred to as the WtW process.

A second part of the mixture of the depleted first stream (205), typically in the form of mixed syngas (referred to as mSG) from the first product stream or recovered (high purity) H₂, may be used as a reductant in the catalytic oxidation unit for the removal of oxygen from the stream returned from the combustor to the WtW process. Thereby, a reheated stream exiting the catalytic oxidation unit M at >400°C can be obtained. When mSG is used, this avoids the need for compression of the corresponding portion of the mSG to combustor pressure, while allowing low-carbon power to be reclaimed therefrom.

In addition to feeding part of the carbon dioxide from the fumes to the electrocatalytic unit, a further part of the carbon dioxide from the fumes may be fed to the combustor. In that case, the ratio between the further part of the carbon dioxide from the fumes which is fed to the combustor to the part of the carbon dioxide from the fumes which is fed to the electrocatalytic unit is usefully >0 and < 99, preferably >0.5 and < 70 and more preferably > 0.5 and < 50.

As indicated earlier, additional oxygen from an additional oxygen source, preferably from an Air Separation Unit (or ASU) or oxygen pipeline, can be supplied to the combustor to ensure substantially complete combustion and thus maximize conversion to CO₂ and water (vapour). Due to the fact that oxygen is generated in the anode chamber of the electrocatalytic unit, it is possible to significantly reduce the size (production capacity) of the power cycle's Air Separation Unit. It is suggested that the process of the present invention with an Allam cycle or SCOC power cycle enables a reduction of the size of the ASU to <70%, more preferably ≤60% of the original size of the power cycle ASU without WtW, with an associated reduction in Capital Expenditure (CAPEX) and parasitic operating power costs. The ASU sizing for an integrated WtW process with the power cycle is such that the electrocatalytic CO₂ conversion process can provide up to 60% of the O₂ demand for the power cycle requirements, more preferably up to 70% of the O₂ requirements with the remainder supplied by an ASU.

The electrocatalytic unit may comprise multiple electrocatalytic cells. These electrocatalytic cells may all be stacked in parallel, may constitute a number of stacks in series, or may form a parallel arrangement of stacks in series. The stacks may have split feeds, such that the offgas from a first electrocatalytic cell or stack is fed to a second electrocatalytic cell or stack in series to make use of the intermediate species such as CO and C₂H₄ that may be produced in the first cell or stack. Water may be fed fresh or co-current to electrocatalytic cells/stacks which are in series; the former in particular if ethanol inhibits target compound formation and the latter in particular if this is not the case.

Electrocatalytic CO₂ conversion is ideally performed at >3 bara, more preferably >10 bara and most preferably at >20 bara. The per pass CO₂ conversion is a minimum of 10%, more preferably ≥20% and most preferably >30%. The performance of the electrocatalytic cell (stack) operation is such that the targeted compound FE must be greater than 45%, more preferably >55% and most preferably >60%. Advantageously, CO has an FE ≤16%, preferably <10% FE. It is not essential but preferable that CH₄ FE is > CO and that H₂ has at least an FE of >13%.

The conversion process according to the present invention combines (a) conversion of CO₂, which would otherwise be released into the atmosphere, to useful chemicals and (b) energy generation. The process:
1) offers robust electrocatalytic process operation as may otherwise be achieved on a standalone plant in that it can incorporate fluctuations in the quantity and/or concentration of CO₂ supplied by external sources;
2) can more readily incorporate renewable energy supply fluctuations, particularly in remote or stranded areas, whilst maintaining a low carbon footprint of operation, in that it includes its own power generation means to mitigate (renewable energy) power fluctuations;
3) can accommodate the inherent variation of product selectivity of an electrocatalytic conversion process over time (in particular due to catalyst aging), in that side products of the conversion process are used for energy generation and/or are recycled;
4) is flexible by design to meet local industry or population needs through the selection of an appropriate energy recovery process, be it solely electrical power or combined heat and power
5) has potentially an almost zero fluid discharge to the environment, in that up to 100% of the process water can be recycled;
6) can deliver low-carbon (<150g CO₂eq/kWhe) energy when in continuous operation, for example during peaks in renewable energy, when enough renewable energy is available for the conversion process without energy from the combustor.

The present invention and its advantages are illustrated and clarified in the examples here-after, whereby reference is further made to Figures 1 to 4, wherein:
1) Figure 1 is a schematic representation of a stranded power configuration whereby renewable power is providing >90% of the WtW process requirements.
2) Figure 2 is a schematic representation of the Allam Cycle as described by the literature
3) Figure 3 is a schematic representation of WtW process connected to an Allam cycle power configuration whereby renewable power is providing <90% of the WtW process requirements. In this case, the cycle is running slightly excess in O₂ and a catalytic oxidation unit is included.
4) Figure 4 is a schematic representation of an Allam cycle power configuration fully integrated with a WtW process whereby renewable power is providing <90% of the WtW process requirements. In this case, the cycle is running slightly excess in O₂ and a catalytic oxidation unit is included.

It will be appreciated that, where in the figures only a single electrocatalytic conversion unit is shown, a battery of electrocatalytic conversion units may in fact be used.

In the figures, identical (stream) reference numbers refer to same or analogous features and dashed lines refer to fluid flows which are optional. Dotted lines in figures refer to heating flows and dash-dot lines refer to a relevant power stream. The target compound in the examples is ethanol.

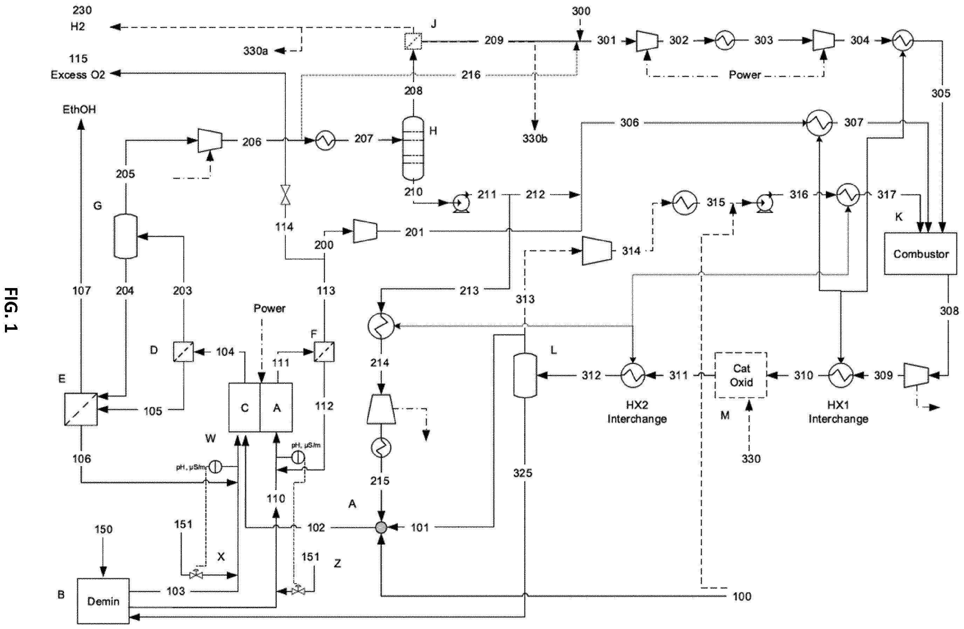

### Example 1 - Stranded WtW Process (illustrated in Figure 1)

In the "stranded" process, the external energy is provided by renewable energy, the fluctuations of which are not compensated by grid power. Therefore, the benefit of a consistent turbine generated power supply to offset said fluctuations is illustrated.

Sources of renewable power, for example large-scale wind, tidal or solar farms, are typically remotely located, away from population centers and industrial basins.

CO₂ is supplied by ship and/or pipeline into a storage vessel 100. From storage vessel 100, the CO₂ can be supplied to electrocatalytic cell W in multiple ways.

A first way (shown by dashed line) is to feed CO₂ from storage vessel 100 to combustor K (as part of stream 317), if necessary after first having been compressed to the required pressure. Alternatively, as shown in Figure 1, CO₂ from storage vessel 100 is fed directly to the electrocatalytic process, if necessary after first being compressed and/or after purification, such as passing through an absorbent bed for trace impurity removal, and/or after preheating, e.g. to >100°C, and passing through a turbo-expander to recover power or refrigerative work.

The CO₂ stream is then cooled and delivered at a process pressure slightly above that of the electrocatalytic WtW conversion process.

In the illustrated embodiment, the fresh CO₂ stream from vessel 100 is combined with a return CO₂ stream 101 from combustor K, and a WtW internal recycle CO₂ stream 215 to produce the CO₂ feed stream 102 to the electrocatalytic unit of the WtW process.

Separately, makeup water 150 is supplied to a demineralization plant B. The demineralization plant B also takes in condensate return lines from elsewhere in the system and combines the different water supplies to produce demineralized water which is delivered in two streams 103 and 110 to respectively the cathode and the anode chambers C and A respectively. The streams 103 and 110 are respectively dosed at X and Z with an electrolyte (salt) 151 to create solutions of required hydroxide or proton concentration for the electrocatalytic process. For the cathode aqueous feed stream, the solution consists of recycled cathode aqueous stream 106 post purification step E in combination with makeup stream 103. For the anode aqueous feed stream, the solution consists of makeup stream 110 combined with recycled anode stream 112 post separation step F.

CO₂ feed stream 102 is fed to the cathode chamber C, either separately as a dry or humid gas, or optionally together with combined water stream 103 and 106 as a two-phase saturated CO₂/water solution feed stream.

Product stream 104 from the cathode chamber is passed to separation vessel D whereby aqueous stream 105 is separated from CO₂-containing stream 203. Stream 203 has a high CO₂ content and contains at least H₂, but more generally a mixture of H₂, CO and methane, aka mixed SynGas stream or mSG. The mSG stream 203 is then passed through a molecular sieve process G to remove water and alcohols (if present) as reject stream 204.

When the target compound is an alcohol, aqueous stream 105 and reject stream 204 are passed to alcohol dewatering process E, where the water and electrolyte is separated from the alcohol, for example using distillation or membrane based processes or a combination of both. This delivers a rich alcohol product stream 107 of a desired alcohol concentration, and a return aqueous stream 106 containing electrolyte and a residual amount of alcohol.

Dried gaseous stream 205 from molecular sieve G is compressed as stream 206 to the pressure required for the separation of CO₂ from the mSG in process H. Stream 206 is cooled as stream 207 before being fed to the separation process H, which may be a cryo-distillation unit, a membrane unit, a Pressure Swing Adsorption unit, or a combination of at least two of these technologies, compiled in such a fashion as to deliver the optimum energy efficiency based on the CO₂ concentration in stream 207.

In a preferable embodiment of the invention, in particular for CO₂ feeds that are >60%vol CO₂, a cryo-distillation process is used. Cryo-distillation avoids the need for a purging gas, and has a greater degree of flexibility for relatively high CO₂ concentrations than PSA units. Membrane units will work well at higher pressures, however for comparative performance to the cryo-distillation unit, this demands higher pressure and thus higher compression. A cryo-distillation process for what is nominally a concentrated CO₂ stream,is optimally run at 10-55 bar, with a preference for 10-45 bar and most preferably at 20-45 bar. At its optimum, the cryo-distillation process delivers reduced electricity consumption for the compression duty and a minimum reboiler/condenser duty. It also delivers liquid CO₂ for recompression and recycling, which reduces the net power demand of the process.

CO₂ is thus largely removed from stream 207 into stream 210. The remaining mSG stream 208 may then optionally be reheated and passed through a membrane system J for H₂ recovery as stream 230 for subsequent sale, storage or use onsite or offsite. With or without such hydrogen separation, the mSG stream 209 is supplied to the power cycle.

The CO₂ should be largely devoid of H₂, more preferably of H₂ and methane although recycled ethylene and CO to the electrocatalytic unit as reaction intermediates may be favourable. This reduction in separation duty may add to the overall process efficiency.

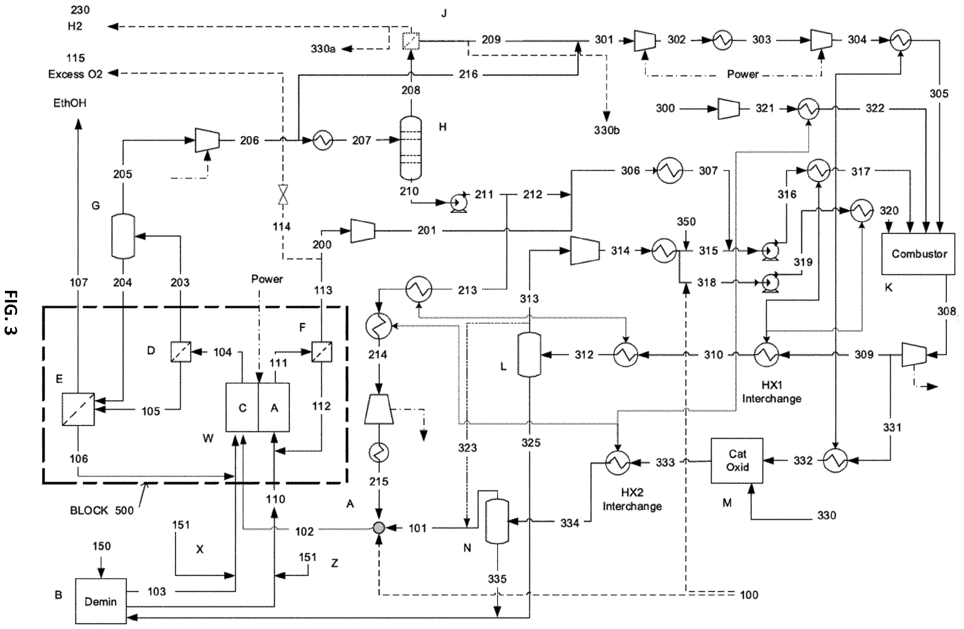

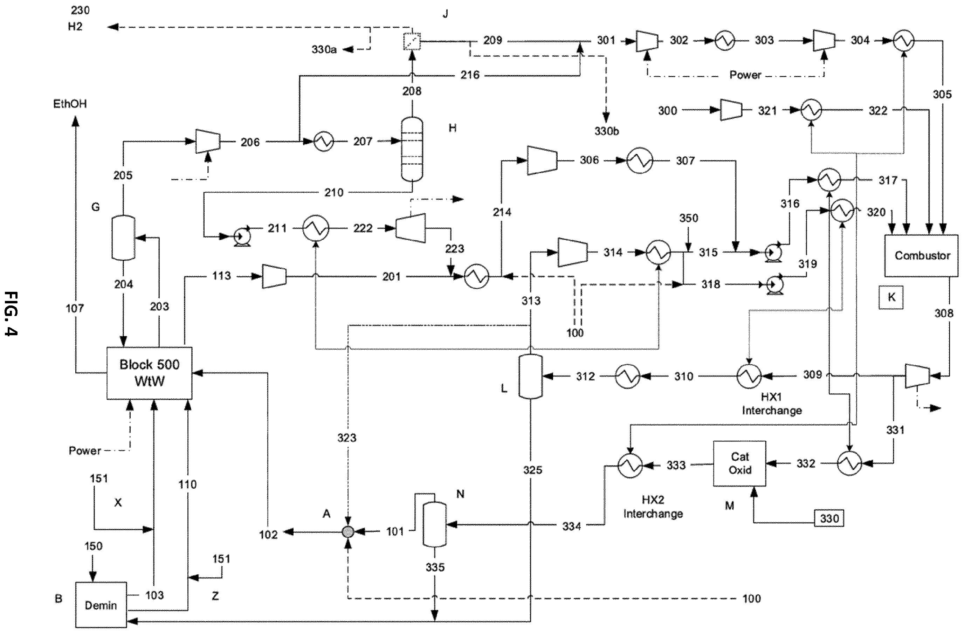

A partial offtake stream 330 may optionally be used in catalytic oxidation step M which is described later in the example and which is also illustrated in Figures 3 and 4. Offtake stream 330 may be extracted from the H₂ product stream 230 (shown as 330a) or from the mSG stream 209 (shown as 330b).

A bypass stream 216 may be taken off stream 206 and be recombined with stream 209 containing the CO₂-lean mSG from the separation processes of H and optionally J. The bypass enables the cryo-distillation process to be sized for a reduced flow, whilst still delivering a concentrated combustible mSG stream to the combustion chamber, and still maintains a purified CO₂ flow sufficient for the WtW internal recycle and/or for mixing with O₂ in stream 306.

As indicated earlier, additional fuel, such as natural gas 300 may be added to stream 209 so as to form stream 301. If no mSG stream is available, such as during start-up, stream 301 may even consist of such an additional fuel.

Stream 301 is fed to a multi-stage compression and cooling process, see streams 302 to 305, in order to bring combustible stream 305 up to the pressure of combustor K. The temperature of stream 305 may be up to 700°C, but is more preferably <500°C and most preferably ≤ 400°C so as to avoid metal dusting upstream of combustor K.

Anode product stream 111 consists of O₂ and water vapour. Water may be removed by known means in water removal step F, with the returned electrolyte-containing aqueous stream 112 being added to stream 110 to the anode chamber A. Stream 113, which contains predominantly O₂ may optionally be split into two streams 114 and 200.

Oxygen-containing stream 114 may be depressurised (depending upon the operating pressure of water-removal unit F). Resulting stream 115 may be used for various onsite purposes, such as waste water treatment via oxidation, as a pre-treatment of makeup water onsite, or used offsite in an industrial process, such as a blast furnace.

Oxygen containing stream 200, on the other hand is further compressed (with inter-stage cooling as required but not shown) to a pressure slightly above that of combustor K. Compressed stream 201 is mixed with compressed CO₂ stream 212 from separation unit H. Combined O₂ and CO₂ stream 306 is preheated to >400°C and heated stream 307 is sent to combustor K as the combustion oxidant.

In combustor K, heated streams 305 and 307 are combined, optionally with a recycled CO₂ stream 313 to 317 issued from the combustor fumes 308.

Combustor K converts all supplied hydrocarbons and mSG into primarily CO₂ and water yielding an exit stream (fumes) 308 at temperatures >950°C, and more preferably >1050°C. Stream 308 is passed through an expansion turbine where mechanical or electrical energy is recovered, before resulting stream 309 is cooled to stream 310 in a set of heat exchangers that may be used to preheat one or more feeds 304, 306, 316 to combustor K.

If the combustion cycle is run O₂ lean, then CO is present in fumes 308 and therefore in cooled stream 311.

If fumes 308, 310 contain O₂ at a level detrimental to the WtW process, it is advisable to pass partially cooled stream 310 through a catalytic oxidation reactor M. At oxygen levels in fumes 308, 310 of at least 0.1%vol, the catalytic bed can make use of H₂ 330a recovered from stream 230, or of the offtake 330b drawn from stream 209 to achieve oxygen removal. In that case, resulting de-oxidized fumes stream 311 may be used for improved heat integration with other parts of the system - such as, for example, for heating the recycle CO₂ stream 213 to stream 214, with the possibility of expanding stream 214 to stream 215 so as to recover energy by means of an expansion turbine.

Resulting fumes stream 311 is cooled further so that water condenses therefrom, preferably to a temperature <40°C, more preferably <30°C and most preferably to 20°C.

Water condensed from Stream 312 is separated in vapour/liquid separation unit L and condensate 325 is sent to demineralisation plant B to be recycled to the WtW process.

Gaseous CO₂ 101 from vapour/liquid separation unit L is sent back to the WtW process. As indicated above, a gaseous CO₂ side stream from unit L may be recycled via streams 313 to 317 to combustor K to balance the CO₂ combustor requirements, via a circuit comprising one or more of compression, cooling and pumping steps and an optional final preheating step.

The Allam cycle as described in R.J. Allam et al. / Energy Procedia 37 (2013) 1135 - 1149 is an oxy-combustion power cycle that delivers CO₂ ready for CCS. It is at its most efficient when using natural gas as a feed.

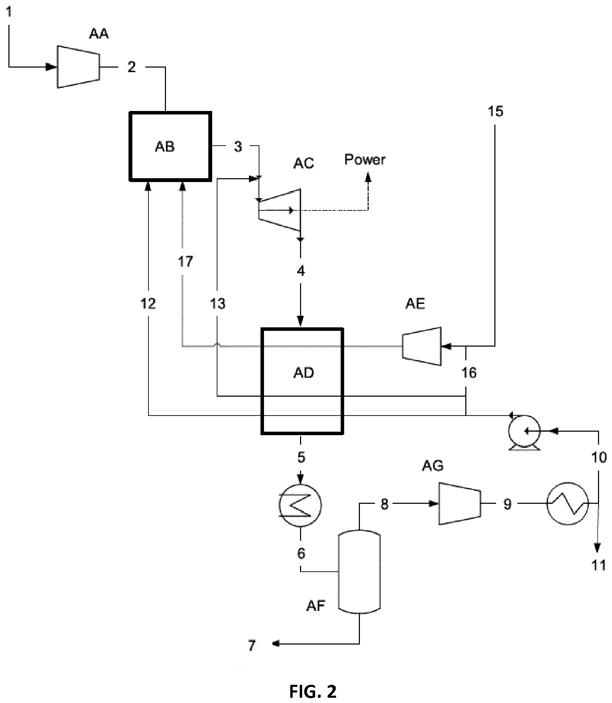

An example of a basic Allam cycle is shown in Figure 2.
1. Natural Gas 1 is compressed in compressor AA to a pressure of 300 bar before the compressed natural gas 2 is fed to combustor AB.
2. Compressed oxygen 15, generated by an ASU, is mixed with a pressurised cooled stream of liquid CO₂ 16 at a minimum pressure of 90 bar. The mixture may be further compressed by compressor AE to a pressure of 300 bar. Alternatively, oxygen 15 may also be introduced into CO₂ at pressure > 300 bar through an eductor arrangement to avoid the need for further compression. The combined stream is passed through a heat exchange unit AD, whereby mixed stream 17 is heated to a temperature of at least 400°C.
3. Two further streams 12, 13 of compressed CO₂ in a liquid form are preheated in heat exchange unit AD, to at least 400°C. Only one stream 12 is sent to Combustor AB, whilst stream 13, which may have a higher temperature than stream 12, bypasses the combustor.
4. In Combustor AB, CO₂ stream 12 and the mixed stream 17, together with the natural gas combust to generate combustion gases 3 at >1050°C, typically about 1150°C
5. Combustion gases 3 are combined with the second CO₂ stream 13 and expanded in turbine AC to yield electrical power.
6. The depressurised exit combustion gas stream 4 from turbine AC is cooled by heat exchange with the incoming CO₂ streams 12, 13 and 17 in heat exchange unit AD. Heat exchange unit AD may in particular consist of multiple heat exchangers.
7. Cooled combustion gases 5 leaving heat exchange unit AD may be at around 30-40 bar pressure and may, for example, be further cooled so as to condense water therefrom. The resulting two-phase stream 6 then passes into vapour/liquid separation unit AF.
8. Condensate 7 (mainly water) is separated from the mostly dried CO₂ stream 8 which is then recompressed through compressor AG to at least 90 bar, optionally at least 120 bar. Compressed stream 9 is then cooled to condense the CO₂ from vapour to liquid (stream 10) before being compressed in a pump.
9. For CCS purposes, cooled liquid CO₂ stream 11 at 120 bar, which may be compressed further to at least 150 bar (normal CCS pressures), is then sent for sequestration. In known Allam cycles, the sequestered CO₂ may consist of only about 3-4% of the total circulating CO₂ flows.
10. The remaining liquid CO₂ recycled flow 10 is then compressed back to a pressure slightly higher than the combustor, and then split into the afore mentioned streams of 12,13 and 16.

### Example 2 - A combined WtW Allam cycle process with nominal 3% CO₂ removal for CCS (illustrated in Figure 3)

As stated earlier, the Allam cycle is designed as an oxy-combustion power cycle using fossil fuel that delivers CO₂ ready for CCS and thus low-carbon power for export. In the event that the generating site has no access to a CCS site, the low carbon value of the power plant remains unrealized.

With the integration of the Allam cycle (or any other oxy combustion power cycle) into the present invention, the CCS-ready CO₂ can be used to generate a desired target compound. In addition, a mixed syngas is produced which further reduces the natural gas requirements of the Allam cycle, reducing further the carbon footprint of the generated power.

The combined Allam and WtW plant then has the ability to respond to grid fluctuations on a short-term basis by using the flexibility of the mSG produced to reduce or supplement the natural gas requirements to the power process.

When the produced target compound is an energy carrier, it can be used to produce power, but with an efficiency greater than most Power to Chemical to Power processes due to scale and with the CO₂ emissions recaptured, thus closing the carbon loop. The target compound can thus be used to displace fossil fuel or chemical equivalents.

Starting with the power cycle, natural gas 300 is compressed and the compressed natural gas 321 is optionally heated before the natural gas 322 is fed to combustor unit K.

O₂ 350 from an ASU (not shown) is blended with a cooled liquid CO₂ stream 314, and the combined stream 315 is fed to a pump, whereafter compressed combined stream 316 is heated to at least 400°C. Heated CO₂ and O₂ stream 317 is sent to combustor K.

Separately, liquid CO₂ stream 318 is compressed to slightly above combustor pressure and compressed stream 319 is heated to 710-720°C before being injected 320 into combustor K.

Natural gas 322 combusts with combined stream 317 in combustor K, which, together with 320, generates fumes 308. Fumes 308, which contain H₂O, are passed through a turbine, thereby generating power. The turbine outlet stream is split, with a small fraction of 2-4% of the CO₂-rich stream 331 being sent to one direct heat exchange and the major portion 309 of the flow being sent to the main heat interchange HX1 as shown. In this example, outlet stream 309 is heat exchanged with CO₂ stream 319 and CO₂ and O₂ stream 316. Resulting cooled stream 310 can be used to preheat stream 213 prior to removing water from cooled stream 312 in unit L. The condensed water 325 is sent to demineralized water plant B.

The CO₂ may be split in two streams 313 and 323. Stream 313 is compressed to at least 90 bar. Compressed CO₂ 314 is cooled, thus completing the primary CO₂ power internal recycle (or PIR). In the event that the catalytic oxidation unit M is not required, then stream 323 supplies the CO₂ to the WtW process.

The other stream 331 is then cooled by heating an incoming stream to the combustor (e.g. 304 in this example) but the stream 332 remains >250°C, preferably >350°C.

In the event that combustor K is run with excess O₂, stream 330, which originates from the WtW process and which is H₂ or mSG, is sent to catalytic oxidation unit M. The objective is to add about 50-150°C of superheat to the exiting stream 333 from the Catalytic Oxidation unit which can then be used in preheating the natural gas 321 or the CO₂ stream on the WtW internal recycle 213 or WIR. The stream is then cooled further 334 so that the bulk of the water is removed 335 from the CO₂ stream in unit N and sent to the plant B. The resulting CO₂ stream 101 is fed to the WtW process with the addition of WtW Internal Recycle stream 215.

In the event that the power cycle (combustor K) runs slightly lean in operation, such that residual O₂ levels in stream 309 do not present an issue to the WtW electrocatalytic operation, then catalytic oxidation unit M is not required. However, it is advantageous to run the process with an excess of O₂ at <1.5%vol, preferably ≤1%vol, in order to elicit some useful superheat for the WIR and the CO₂ turbine.

Optional fresh CO₂ stream 100 is combined with return CO₂ stream 101 and WtW internal recycle CO₂ stream 215 to produce CO₂ feed stream 102 to the WtW process W as described before in Example 1.

After drying of the mSG stream 203 and subsequent compression of stream 205, a bypass stream 216 may be taken from stream 206 and be recombined with stream 209 containing CO₂ lean mSG from the separation processes of H and optionally J. The bypass enables the cryo-distillation process to be sized for reduced flow. Equally, the bypass enables extra capacity to be added at a later date without increasing the cryo-distillation H duty.

The enriched mSG stream 301 is then subjected to multistage compression and cooling cycles before addition to the combustor K, with the natural gas (NG) 322, synthetic air stream 317 and pure CO₂ 320 for the cycle to repeat. The return of the mSG stream 301 enables either increased power production to be generated beyond that of the base Allam cycle, or permits the NG feed stream 300 to be reduced, which delivers a valuable OPEX saving and further net CO₂ reductions.

### Example 3 - WtW and Allam cycle with full integration (illustrated in Figure 4)

Block 500 of Figure 4 corresponds to the combination of features as identified by said number in Figure 3.

In the embodiment illustrated in example 2, a substantial internal CO₂ recycle on the Power cycle is combined with a considerable internal CO₂ recycle on the WtW process between the CO₂ separation (nominally the cryo-distillation unit H) and the electrocatalytic process inlet. Given the desire to convert as much CO₂ as possible and, if sufficient low-carbon renewable power is available, it would be preferable to maximize the CO₂ flow to the electrocatalytic unit W and to reduce the Power cycle internal CO₂ recycle 313 from typically 90-96% of CO₂ to the minimum amount required so as arrive at a combustion oxidant 317 with a suitable O₂ content, while sending the rest by CO₂ stream 323 and/or 331 to the WtW process. Thus the need for a WtW internal CO₂ recycle 213, 214, 215 is eliminated.

The fully integrated process can also be achieved without significant resizing (upscaling) of the CO₂ separation unit (cryo-distillation unit H) by using the bypass 216 around unit H and by combining stream 216 directly with the mSG rich stream 209 (i.e. without passing through unit H) to combustor K via compression.

Compared to the embodiment of example 2, an equivalently sized separation unit H can be deployed to recover nominally pure LCO₂ (Liquid CO₂).

It may still be valuable to recover power by compressing the LCO₂ 211 and then heating it 222 before passing it through a turbo-expander to obtain flow 223 as shown in Figure 4. The stream 223 is then mixed with the co-produced O₂ 201 from the WtW process and compressed together to an intermediate pressure of 90-150 bar. It is then mixed with the much reduced PIR recycle stream of 313-315 and in combination, pumped as a liquid to the required combustor pressure. A relatively pure CO₂ steam 318-320 is still required for addition to the combustor.

The composition of the mSG and more specifically its CO and CO₂ content are highly significant to prevent metal dusting when the mSG is preheated to a temperature of >400°C, for instance circa 550°C, before the inlet of combustor K. The potential for metal dusting is greatly reduced when mSG stream 305 runs under conditions that do not favour Boudouard Carbon formation, which means avoiding certain H₂, CO, CO₂ composition mixtures at temperatures >400°C.

The integrated process permits natural gas 300 requirements to be reduced to the minimum, saving significant operational costs and permitting the plant to be run closer to optimum operation, while keeping natural gas 300 available to balance fluctuations in low-carbon renewable power which may result in reduced mSG availability from the WtW process.

The integrated cycle of example 3 is analogous to that of example 2, except for the following variations of note:
1) The absence of the WtW internal recycle (WIR).
2) The WtW Feed (WF) or stream 331 is now no longer 3-10% as per example 2 but can be 20-60% of the flow in stream 308.
3) Insufficient CO₂ feed from the WtW process to the combustor K can occur with a high CO₂ per pass conversion or with a high H₂ content in the mSG relative to the CO and CH₄ content in the combustible mSG. This may lead to instability and sub-optimal performance in combustor K. In which case, it is possible to take CO₂ from an external source 100 to compensate. Where the CO₂ stream 100 is injected in the process (either into stream 214 or 102 or 318) is largely dependent upon the pressure of the CO₂ source 100 and the pressure of the WtW process W.
4) Stable operation of combustor K may be improved by providing a secondary combustion zone within K or a parallel combustor and turbine cycle (not shown).
5) The lack of need for an external O₂ stream 115, given that the optimum process would process the amount of CO₂ that delivers 65% of O₂ combustion needs, which reduces the ASU size, although this does not preclude more CO₂ conversion and excess O₂ production.
6) The CO₂ turbine on the WIR (between 214 and 215) in Figure 3 is optionally included and now shifted directly to the outlet of the CO₂ liquid pump on the WtW Cryo-distillation Unit H (between 222 and 223). Stream 211, which is compressed to at least 120 bar, is the compressed stream of 210. It is then heated in heat exchange with the cooler on the PIR CO₂ recycle stream 314 before recovering power through the turbine. The now lower pressure CO₂ 223 is then admixed with the O₂ from the WtW before the combined stream 214 is cooled and compressed 306 before cooling 307 and merging with 315 for the final compression of a liquid CO₂ mixture.
7) In the fully integrated process, running combustor K in excess O₂ is particularly beneficial since it can make more use of the O₂ produced electrocatalytically, and also of the mSG or H₂ that is produced, to ultimately deliver more electrical power (with net reduction of renewable grid power needed) or alternate process heating streams for the site, thus increasing the overall efficiency of the process.

Table 1 below compares four cases based on the previously described examples 2 and 3. It demonstrates the benefits of integration and higher per pass conversion whilst delivering CCU in relation to the base Allam cycle.

The same methodology has been applied to the heat exchange in general, with the flow to the combustor and the main power turbine held approximately constant for comparative purposes where possible.

A nominal 300 kWh/kmol of CO₂ reacted is applied to the WtW electrocatalytic process although this is inclusive of all the electrocatalytically produced products.

Compressors and pumps have a standard adiabatic efficiency applied of 75%.

An FE selectivity of 65% for CO₂ was applied to ethanol, the target compound. A carbon selectivity of 5% and 1% was applied to ethylene and methanol production respectively as indicative of a less than perfect process with CH₄ at 10% and CO at 19%.

A power input for the ASU was assumed as 0.55 kWhe/Nm3 O₂. The parasitic power demand in the table excludes the heating and cooling required for the electrocatalytic module feed and stack discharge respectively. The results were compared with a basic Allam cycle power process, an Allam cycle based power process with WtW at 10% per pass CO₂ conversion, an Allam cycle based power process with WtW at 30% per pass CO₂ conversion, and finally an integrated Allam cycle with a WtW process at 10% per pass CO₂ conversion.

Not all turbine inlet temperatures were equivalent in each case as shown.

In all the example cases, all mSG and any H₂ separated from the mSG is consumed entirely within the process - there is no export offsite.

Ethanol is recovered in all cases of 2 to 4 as shown.

**Table 1 - Case examples**

| **Case Number** | **Units** | **1** | **2** | **3** | **4** |
|---|---|---|---|---|---|
| **Case** | | **Allam cycle without WtW (Base)** | **Allam Cycle with ca. 3% CO₂ diverted to WtW** | **Allam Cycle with ca. 3% CO₂ diverted to WtW, higher conversion** | **Allam integrated with WtW** |
| CO₂ pp conversion in WtW | % | - | 10% | 30% | 10% |
| O₂ demand of combined process | kmol/ h | 4470 | 5640 | 5184 | 5025 |
| O₂ supplied by WtW | kmol/ h | 0 | 3192 | 3090 | 3444 |
| ASU requirement | % of base Allam | 100% | 55% | 47% | 35% |
| NG feed | kmol/ h | 2235 | 2235 | 2035 | 1850 |
| Turbine Inlet Temperature | °C | 1053 | 1081 | 1135 | 1057 |
| Gas turbine output (from Stream 308) | MW | 358 | 460 | 458 | 376 |
| Combined Process Parasitic Power demand, excl. O2 from ASU | MW | 106 | 129 | 110 | 113 |
| Electrocatalytic power demand | MW | 0 | 638 | 618 | 689 |
| Net power demand, including ASU O₂ | MW | + 196 | -338 | -298 | -445 |
| %Electrolysis Power met by Power cycle | % | - | 47% | 52% | 35% |
| EthOH produced | t/h | - | 33.7 | 32.6 | 35.1 |
| Flow to Main turbine (Stream 308) | kmol/ h | 75300 | 90100 | 76600 | 79810 |
| Recycle compressor flow (Stream 313) | kmol/ h | 68570 | 81330 | 68500 | 51600 |
| Flow ratio of stream s 313/(313+101) ) | % | 97.0 | 97.3 | 96.9 | 69.1 |
| WtW WIR recycle flow (Stream 215) | kmol/ h | - | 20129 | 5012 | 0 |
| Flow to WtW cryo-distillation unit (Stream 207) | kmol/ h | - | 20657 | 6095 | 12730 |
| % bypass WtW cryo (Flow ratio of streams 216/(216+207) ) | % | - | 0 | 0 | 40% |
| CO₂ feed to WtW (Stream 101) | kmol/ h | 2156 | 2228 | 2156 | 23030 |
| WtW Water demand from combustion water | % | - | 91 | 121 | 82 |

Whilst the Allam cycle variant is used here to demonstrate the process of integration, the invention can equally apply to other oxy-combustion cycles, with similar findings depending upon the WtW process and power cycle process parameters.

The base Allam case (comparative Case 1) delivers CO₂ via CCS or to an alternate plant utilisation for it to be delivering green power. If emitting to the air, the process remains very efficient in its most optimized form but with full CO₂ emissions from the hydrocarbon fuel source. Hence, it does not deliver green electricity.

Case 2 according to the invention includes the WtW process at a low 10% per pass conversion through the catalytic cells and with circa 3% of CO₂ in the turbine fumes taken from the power cycle, for processing in the WtW process and not for CCS as in case 1.

Case 2 establishes a relative baseline for the WtW process of net parasitic energy consumption in combination with the power cycle, and relative flow to the WtW cryo-distillation unit and thus size.

Case 3 in relation to case 2 has a higher 30% per pass CO₂ conversion through the electrocatalytic process with circa 3% of CO₂ taken from the power process as a feed to the WtW process. In case 3, the additional natural gas feed is reduced due to the higher mSG flowrate, in turn due to the higher per pass conversion and reduced O2 content compared to case 2 delivering more mSG to stream 305. The turbine output is similar to case 2 but achieved at a higher inlet temperature because of the reduced CO2 flow to the turbine by comparison. This delivers enhanced efficiency.

Case 4 has a similar CO₂ per pass conversion rate as Case 2, however more CO₂ is diverted to the WtW process than in Case 2, as is evidenced by the greater Ethanol production. This concurrently delivers more mSG however at the cost of a greater renewable energy demand. This is countered by capital and operating savings.

More specifically, in cases 2 to 4:
1) The makeup water demand for the WtW process can be met significantly or entirely by the recovered water from the combined process, further reducing the process environmental footprint.
2) The ASU size can be reduced relative to the Base Allam Case by at least 40% which reduces significantly the operating and capital cost of the oxy-combustion power cycle.
3) A renewable energy source is required, but substantial onsite generation offsets the total demand in example cases 2 to 4 and also reduces the process susceptibility to fluctuations in renewable power supply by doing so. It also means mSG can be stored temporarily for durations up to 12 or 24 hrs to buffer grid power demand. This delivers flexibility to the total process operation without reducing process stability.

Case 2 demonstrates that relative to case 1:
1) It demonstrates that CO₂ can be sequestered into another product of value using low-carbon external power sources whilst delivering low-carbon power to the grid, without the need for CCS.
2) The significant power contribution to the process provides a flexibility to the operator in terms of structuring the power supply contract to balance WtW process demand but also to capitalise on the spot market at times of high demand through low-carbon power export. Comparing case 3 to case 2, and whilst noting the higher CO₂ turbine flow in case 2, one can see that:
   1) From the Capital expenditure perspective, the higher per pass conversion delivers
      a. very much reduced separation (Cryo-distillation) unit and WIR recycle scale, and
      b. much reduced CAPEX on the electrocatalytic units.
   2) From the Operating expenditure perspective,
      a. the NG can be reduced due to the mSG that is recycled to the process and the reduced CO₂ flow back to the process from the higher conversion. This enables higher turbine inlet temperatures and thus more efficient power generation, and
      b. the separation (Cryo-distillation) duty is reduced compared to case 2 due to the higher per pass CO₂ conversion.

Comparing case 4 to case 2 at the same per pass conversion, the benefits of direct integration can be seen:
1) From the Capital expenditure perspective, the integration delivers
   a. a much reduced CO₂ recycle (PIR) in the power process, resulting in smaller compressors and heat exchangers,
   b. a very much reduced ASU capacity which makes full use of the generated O₂ within the process, increasing efficiency,
   c. a much reduced separation (Cryo-distillation) unit, and
   d. no requirement for the WIR stream at steady state operation.
2) from the Operating expenditure perspective,
   a. the NG can be reduced due to the greater level of CO₂ derived mSG that is recycled to the process. This delivers valued savings and reduces further the carbon footprint of the generated power,
   b. the separation (Cryo-distillation) duty is reduced compared to case 2 due to the bypass being used, and
   c. lower parasitic power demand overall, particularly due to the reduction in the CO₂ recycled in the power process.

Enhanced per pass conversion would make Case 4 even more efficient, with further reductions in natural gas fuel feed for the same power output.

Thus the Cases 2-4 demonstrate the ability to deliver CCU to a target compound using renewable power, whilst at the same time delivering significant quantities of a low-carbon power generated within the process itself, to provide robustness to the WtW process plant operation and optionally deliver low-carbon power to the grid. This can be achieved through adding the WtW process to a CO₂-based oxy-combustion power cycle, or through the full integration with a CO₂-based oxy-combustion power cycle, with advantages in CAPEX reduction and operational cost reductions in both cases compared to a standalone oxy-combustion process and a similar CCU process operating with only renewable energy from the grid.

## Claims

1. Carbon dioxide conversion process:
• whereby carbon dioxide and water are supplied to an electrocatalytic unit (W) containing at least one cell comprising a cathode chamber (C) and an anode chamber (A),
• whereby a C1 or C2 target compound selected from the group consisting of methanol, ethanol and ethylene, is produced in the cathode chamber (C) with a Faradaic Efficiency of at least 45%, said target compound being evacuated from the cathode chamber (C) in a first product stream (104) consisting of (i) water, (ii) the target compound and (iii) a mixture containing at least unconverted carbon dioxide and hydrogen,
• whereby oxygen is produced in the anode chamber (A), said oxygen being evacuated from the anode chamber (A) as part of a second product stream (111),
• whereby target compound (107) is extracted from the evacuated first product stream (104) and a depleted first stream is thereby obtained,
• whereby, at least a first part (209) of the mixture of the depleted first stream (205) and a first part (201) of the oxygen of the second product stream (111) are fed to a combustor (K) wherein said first part (209) of the mixture of the depleted first stream (205) is combusted using at least said first part (201) of the oxygen as a combustion oxidant, thereby generating thermal energy and fumes (308) consisting for at least 98 %vol of carbon dioxide and water,
• whereby thermal energy generated in the combustor (K) is recovered and
• whereby at least part and preferably all of the carbon dioxide (101) from the fumes is fed to the electrocatalytic unit (W).

2. Carbon dioxide conversion process according to claim 1, whereby the target compound (107) is ethanol.

3. Carbon dioxide conversion process according to claim 1 or 2, whereby at least part of the water (325 and 335) from the fumes (308) is fed to the electrocatalytic unit (W) as makeup water.

4. Carbon dioxide conversion process according to any one of the preceding claims, whereby at least part of the recovered thermal energy is converted into mechanical and/or electrical power, preferably into electrical power.

5. Carbon dioxide conversion process according to claim 4, whereby at least part of the recovered thermal energy is converted into electrical power, which is at least in part consumed by the electricity requirement of the carbon dioxide conversion process, preferably by the electrocatalytic unit (W).

6. Carbon dioxide conversion process according to any one of the preceding claims, whereby at least part and preferably all of the electric power consumed by the carbon dioxide conversion process and not generated by the carbon dioxide conversion process is generated by renewable energy sources

7. Carbon dioxide conversion process according to any one of the preceding claims, whereby, in addition to carbon dioxide (101) from the fumes (308) generated in the combustor (K), additional carbon dioxide (100), preferably generated as a by-product of industrial processes, is supplied to the electrocatalytic unit (W).

8. Carbon dioxide conversion process according to any one of the preceding claims, whereby the target compound (107) extracted from the evacuated first product stream (104) is subjected to concentration by partial or total removal of water and/or unconverted carbon dioxide therefrom.

9. Carbon dioxide conversion process according to any one of the preceding claims, whereby the oxygen (113) from the second product stream (111) is concentrated by partial or total water removal therefrom.

10. Carbon dioxide conversion process according to any one of the preceding claims,
• whereby, after target compound (107) has been extracted from the evacuated first product stream (104), the mixture of the depleted first product stream (205) is separated in a carbon-dioxide enriched fraction (210) and a carbon-dioxide depleted fraction (208), all or part of the carbon-dioxide enriched fraction (212) being then mixed with oxygen (201) from the second product stream (111), preferably so as to obtain an oxygen concentration of between 16 and 25%vol, preferably between 18 and 23%vol, before being supplied to the combustor (K) as combustion oxidant (307), and
• whereby all or part of the carbon-dioxide depleted fraction (208) is supplied to the combustor (K) as the first part (209) of the mixture of the depleted first product stream (205) for combustion therein with the combustion oxidant (307).

11. Carbon dioxide conversion process according to claim 10, whereby a fraction (213) of the carbon-dioxide enriched fraction (210) is sent to the electrocatalytic unit (W), without first being sent to the combustor (K).

12. Carbon dioxide conversion process according to any one of the preceding claims, whereby the first part (209) of the mixture of the depleted first product stream (205) which is supplied to the combustor (K) is a hydrogen-depleted fraction of the mixture of the depleted first product stream (205).

13. Carbon dioxide conversion process according to any one of the preceding claims, whereby, in addition to the first part (201) of the oxygen of the second product stream (111), additional oxygen from an additional oxygen source, preferably from an air separation unit or oxygen pipeline, is supplied to the combustor (K) and/or whereby in addition to the first part (209) of the mixture (305) of the depleted first product stream (205), fuel (300) from an additional fuel source is supplied to the combustor (K).

14. Carbon dioxide conversion process according to any one of the preceding claims, whereby the combustor (K) is operated with an excess of oxygen and whereby the fumes (308) are passed through a catalytic oxidation unit (M) to remove the oxygen therefrom before carbon dioxide (101) from the fumes (308) is supplied to the electrocatalytic unit (W), whereby preferably at least a second part of the mixture (209) of the depleted first product stream (205) is supplied to the catalytic oxidation unit (M).

15. Carbon dioxide conversion process according to any one of the preceding claims whereby a further part (313) of the carbon dioxide from the fumes (308) is fed to the combustor (K), whereby preferably the ratio between the further part (313) of the carbon dioxide from the fumes (308) which is fed to the combustor (K) to the part (101) of the carbon dioxide from the fumes (308) which is fed to the electrocatalytic unit (W) is >0 and < 99, more preferably >0.5 and < 70 and most preferably > 0.5 and < 50.

## Patentansprüche

1. Verfahren zur Umwandlung von Kohlendioxid:
• wobei Kohlendioxid und Wasser einer elektrokatalytischen Einheit (W) zugeführt werden, die mindestens eine Zelle enthält, die eine Kathodenkammer (C) und eine Anodenkammer (A) umfasst,
• wobei eine C1- oder C2-Zielverbindung, die aus der Gruppe ausgewählt ist, bestehend aus Methanol, Ethanol und Ethylen, in der Kathodenkammer (C) mit einer Faraday-Effizienz von mindestens 45 % hergestellt wird, wobei die Zielverbindung in einem ersten Produktstrom (104) aus der Kathodenkammer (C) evakuiert wird, der aus (i) Wasser, (ii) der Zielverbindung und (iii) einer Mischung besteht, die mindestens nicht umgewandeltes Kohlendioxid und Wasserstoff enthält,
• wobei Sauerstoff in der Anodenkammer (A) hergestellt wird, wobei der Sauerstoff als Teil eines zweiten Produktstroms (111) aus der Anodenkammer (A) evakuiert wird,
• wobei eine Zielverbindung (107) aus dem evakuierten ersten Produktstrom (104) extrahiert wird und dadurch ein verarmter erster Strom erhalten wird,
• wobei mindestens ein erster Teil (209) der Mischung des verarmten ersten Stroms (205) und ein erster Teil (201) des Sauerstoffs des zweiten Produktstroms (111) in eine Brennkammer (K) eingespeist werden, wobei der erste Teil (209) der Mischung des verarmten ersten Stroms (205) unter Verwendung mindestens des ersten Teils (201) des Sauerstoffs als ein Verbrennungsoxidationsmittel verbrannt wird, wodurch Wärmeenergie und Dämpfe (308) erzeugt werden, die zu mindestens 98 Volumen-% aus Kohlendioxid und Wasser bestehen,
• wobei Wärmeenergie, die in der Brennkammer (K) erzeugt wird, wiedererlangt wird und
• wobei mindestens ein Teil und vorzugsweise alles Kohlendioxid (101) aus den Dämpfen in die elektrokatalytische Einheit (W) eingespeist wird.

2. Verfahren zur Umwandlung von Kohlendioxid nach Anspruch 1, wobei die Zielverbindung (107) Ethanol ist.

3. Verfahren zur Umwandlung von Kohlendioxid nach Anspruch 1 oder 2, wobei mindestens ein Teil des Wassers (325 und 335) aus den Dämpfen (308) als Zuschusswasser in die elektrokatalytische Einheit (W) eingespeist wird.

4. Verfahren zur Umwandlung von Kohlendioxid nach einem der vorhergehenden Ansprüche, wobei mindestens ein Teil der wiedererlangten Wärmeenergie in mechanische Leistung und/oder elektrischen Strom, vorzugsweise in elektrischen Strom, umgewandelt wird.

5. Verfahren zur Umwandlung von Kohlendioxid nach Anspruch 4, wodurch mindestens ein Teil der wiedererlangten Wärmeenergie in elektrischen Strom umgewandelt wird, der mindestens teilweise durch den Strombedarf des Verfahrens zur Umwandlung von Kohlendioxid, vorzugsweise durch die elektrokatalytische Einheit (W), verbraucht wird.

6. Verfahren zur Umwandlung von Kohlendioxid nach einem der vorhergehenden Ansprüche, wodurch mindestens ein Teil und vorzugsweise aller elektrischer Strom, der durch das Verfahren zur Umwandlung von Kohlendioxid verbraucht wird und nicht durch das Verfahren zur Umwandlung von Kohlendioxid erzeugt wird, durch erneuerbare Energiequellen erzeugt wird.

7. Verfahren zur Umwandlung von Kohlendioxid nach einem der vorhergehenden Ansprüche, wobei zusätzlich zu Kohlendioxid (101) aus den Dämpfen (308), die in der Brennkammer (K) erzeugt werden, zusätzliches Kohlendioxid (100), das vorzugsweise als ein Nebenprodukt industrieller Prozesse erzeugt wird, der elektrokatalytischen Einheit (W) zugeführt wird.

8. Verfahren zur Umwandlung von Kohlendioxid nach einem der vorhergehenden Ansprüche, wobei die Zielverbindung (107), die aus dem evakuierten ersten Produktstrom (104) extrahiert wird, einer Aufkonzentration durch teilweise oder vollständige Entfernung des Wassers und/oder von nicht umgewandeltem Kohlendioxid daraus unterzogen wird.

9. Verfahren zur Umwandlung von Kohlendioxid nach einem der vorhergehenden Ansprüche, wobei der Sauerstoff (113) aus dem zweiten Produktstrom (111) durch teilweise oder vollständige Wasserentfernung daraus aufkonzentriert wird.

10. Verfahren zur Umwandlung von Kohlendioxid nach einem der vorhergehenden Ansprüche,
• wobei, nachdem eine Zielverbindung (107) aus dem evakuierten ersten Produktstrom (104) extrahiert wurde, die Mischung aus dem verarmten ersten Produktstrom (205) in eine Kohlendioxid-angereicherte Fraktion (210) und in eine Kohlendioxid-verarmte Fraktion (208) getrennt wird, wobei die ganze oder ein Teil der Kohlendioxidangereicherten Fraktion (212) dann mit Sauerstoff (201) aus dem zweiten Produktstrom (111) vermischt wird, um so vorzugsweise eine Sauerstoff-Konzentration zwischen 16 und 25 Volumen-%, bevorzugt zwischen 18 und 23 Volumen-%, zu erhalten, bevor dies der Brennkammer (K) als Verbrennungsoxidationsmittel (307) zugeführt wird, und
• wobei die ganze oder ein Teil der Kohlendioxidverarmten Fraktion (208) als der erste Teil (209) der Mischung des verarmten ersten Produktstroms (205) der Brennkammer (K) zur Verbrennung darin mit dem Verbrennungsoxidationsmittel (307) zugeführt wird.

11. Verfahren zur Umwandlung von Kohlendioxid nach Anspruch 10, wobei eine Fraktion (213) der Kohlendioxidangereicherten Fraktion (210) zu der elektrokatalytischen Einheit (W) geschickt wird, ohne zuerst zu der Brennkammer (K) geschickt zu werden.

12. Verfahren zur Umwandlung von Kohlendioxid nach einem der vorhergehenden Ansprüche, wobei der erste Teil (209) der Mischung des verarmten ersten Produktstroms (205), welcher der Brennkammer (K) zugeführt wird, eine Wasserstoff-verarmte Fraktion der Mischung des verarmten ersten Produktstroms (205) ist.

13. Verfahren zur Umwandlung von Kohlendioxid nach einem der vorhergehenden Ansprüche, wobei zusätzlich zu dem ersten Teil (201) des Sauerstoffs des zweiten Produktstroms (111) zusätzlicher Sauerstoff aus einer zusätzlichen Sauerstoff-Quelle, vorzugsweise aus einer Lufttrennungseinheit oder einer Sauerstoff-Rohrleitung, zu der Brennkammer (K) geliefert wird und/oder wobei zusätzlich zu dem ersten Teil (209) der Mischung (305) des verarmten ersten Produktstroms (205) der Brennkammer (K) Brennstoff (300) aus einer zusätzlichen Brennstoffquelle zugeführt wird.

14. Verfahren zur Umwandlung von Kohlendioxid nach einem der vorhergehenden Ansprüche, wobei die Brennkammer (K) mit einem Überschuss an Sauerstoff betrieben wird und wobei die Dämpfe (308) durch eine katalytische Oxidationseinheit (M) passieren, um den Sauerstoff daraus zu entfernen, bevor der elektrokatalytischen Einheit (W) Kohlendioxid (101) aus den Dämpfen (308) zugeführt wird, wobei der katalytischen Oxidationseinheit (M) vorzugsweise mindestens ein zweiter Teil der Mischung (209) des verarmten ersten Produktstroms (205) zugeführt wird.

15. Verfahren zur Umwandlung von Kohlendioxid nach einem der vorhergehenden Ansprüche, wobei ein weiterer Teil (313) des Kohlendioxids aus den Dämpfen (308) in die Brennkammer (K) eingespeist wird, wodurch vorzugsweise das Verhältnis zwischen dem weiteren Teil (313) des Kohlendioxids aus den Dämpfen (308), das in die Brennkammer (K) eingespeist wird, zu dem Teil (101) des Kohlendioxids aus den Dämpfen (308), das in die elektrokatalytische Einheit (W) eingespeist wird, >0 und <99, besonders bevorzugt >0,5 und <70 und ganz besonders bevorzugt >0,5 und <50 ist.

## Revendications

1. Procédé de conversion de dioxyde de carbone :
• dans lequel du dioxyde de carbone et de l'eau sont fournis à une unité électrocatalytique (W) contenant au moins une cellule comprenant une chambre cathodique (C) et une chambre anodique (A),
• dans lequel un composé cible en C1 ou C2 choisi dans le groupe constitué par le méthanol, l'éthanol et l'éthylène est produit dans la chambre cathodique (C) avec un rendement faradique d'au moins 45 %, ledit composé cible étant évacué de la chambre cathodique (C) dans un premier courant de produit (104) composé (i) d'eau, (ii) du composé cible et (iii) d'un mélange contenant au moins du dioxyde de carbone non converti et de l'hydrogène,
• dans lequel de l'oxygène est produit dans la chambre anodique (A), ledit oxygène étant évacué de la chambre anodique (A) comme partie d'un deuxième courant de produit (111),
• dans lequel un composé cible (107) est extrait du premier courant de produit évacué (104) et un premier courant appauvri est ainsi obtenu,
• dans lequel au moins une première partie (209) du mélange du premier courant appauvri (205) et une première partie (201) de l'oxygène du deuxième courant de produit (111) sont introduites dans une chambre de combustion (K) dans laquelle ladite première partie (209) du mélange du premier courant appauvri (205) est brûlée au moyen au moins de ladite première partie (201) de l'oxygène servant d'oxydant de combustion, générant ainsi de l'énergie thermique et des fumées (308) composées pour au moins 98 % en volume de dioxyde de carbone et d'eau,
• dans lequel l'énergie thermique générée dans la chambre de combustion (K) est récupérée et
• dans lequel au moins une partie et de préférence la totalité du dioxyde de carbone (101) issu des fumées est introduit dans l'unité électrocatalytique (W).

2. Procédé de conversion de dioxyde de carbone selon la revendication 1, dans lequel le composé cible (107) est l'éthanol.

3. Procédé de conversion de dioxyde de carbone selon la revendication 1 ou 2, dans lequel au moins une partie de l'eau (325 et 335) issue des fumées (308) est introduite dans l'unité électrocatalytique (W) comme eau d'appoint.

4. Procédé de conversion de dioxyde de carbone selon l'une quelconque des revendications précédentes, dans lequel au moins une partie de l'énergie thermique récupérée est convertie en puissance mécanique et/ou électrique, de préférence en puissance électrique.

5. Procédé de conversion de dioxyde de carbone selon la revendication 4, dans lequel au moins une partie de l'énergie thermique récupérée est convertie en puissance électrique, qui est au moins en partie consommée par les besoins en électricité du procédé de conversion de dioxyde de carbone, de préférence par l'unité électrocatalytique (W).

6. Procédé de conversion de dioxyde de carbone selon l'une quelconque des revendications précédentes, dans lequel au moins une partie et de préférence la totalité de la puissance électrique consommée par le procédé de conversion de dioxyde de carbone et non générée par le procédé de conversion de dioxyde de carbone est générée par des sources d'énergie renouvelable.

7. Procédé de conversion de dioxyde de carbone selon l'une quelconque des revendications précédentes, dans lequel, en plus du dioxyde de carbone (101) issu des fumées (308) générées dans la chambre de combustion (K), du dioxyde de carbone supplémentaire (100), de préférence généré comme un sous-produit de procédés industriels, est fourni à l'unité électrocatalytique (W).

8. Procédé de conversion de dioxyde de carbone selon l'une quelconque des revendications précédentes, dans lequel le composé cible (107) extrait du premier courant de produit évacué (104) est soumis à une concentration par retrait partiel ou total de l'eau et/ou du dioxyde de carbone non converti de celui-ci.

9. Procédé de conversion de dioxyde de carbone selon l'une quelconque des revendications précédentes, dans lequel l'oxygène (113) issu du deuxième courant de produit (111) est concentré par retrait partiel ou total de l'eau de celui-ci.

10. Procédé de conversion de dioxyde de carbone selon l'une quelconque des revendications précédentes,
• dans lequel, après que le composé cible (107) a été extrait du premier courant de produit évacué (104), le mélange du premier courant de produit appauvri (205) est séparé en une fraction enrichie en dioxyde de carbone (210) et une fraction appauvrie en dioxyde de carbone (208), tout ou partie de la fraction enrichie en dioxyde de carbone (212) étant ensuite mélangée avec de l'oxygène (201) issu du deuxième courant de produit (111), de préférence de manière à obtenir une concentration d'oxygène comprise entre 16 et 25 % en volume, de préférence entre 18 et 23 % en volume, avant d'être fournie à la chambre de combustion (K) comme oxydant de combustion (307), et
• dans lequel tout ou partie de la fraction appauvrie en dioxyde de carbone (208) est fournie à la chambre de combustion (K) comme la première partie (209) du mélange du premier courant de produit appauvri (205) pour être brûlée à l'intérieur avec l'oxydant de combustion (307).

11. Procédé de conversion de dioxyde de carbone selon la revendication 10, dans lequel une fraction (213) de la fraction enrichie en dioxyde de carbone (210) est envoyée à l'unité électrocatalytique (W), sans être d'abord envoyée à la chambre de combustion (K).

12. Procédé de conversion de dioxyde de carbone selon l'une quelconque des revendications précédentes, dans lequel la première partie (209) du mélange du premier courant de produit appauvri (205) qui est fournie à la chambre de combustion (K) est une fraction appauvrie en hydrogène du mélange du premier courant de produit appauvri (205).

13. Procédé de conversion de dioxyde de carbone selon l'une quelconque des revendications précédentes, dans lequel, en plus de la première partie (201) de l'oxygène du deuxième courant de produit (111), de l'oxygène supplémentaire issu d'une source d'oxygène supplémentaire, de préférence d'une unité de séparation d'air ou d'un pipeline d'oxygène, est fourni à la chambre de combustion (K), et/ou dans lequel, en plus de la première partie (209) du mélange (305) du premier courant de produit appauvri (205), un combustible (300) issu d'une source de combustible supplémentaire est fourni à la chambre de combustion (K).

14. Procédé de conversion de dioxyde de carbone selon l'une quelconque des revendications précédentes, dans lequel la chambre de combustion (K) fonctionne avec un excès d'oxygène et dans lequel les fumées (308) sont passées à travers une unité d'oxydation catalytique (M) pour en retirer l'oxygène avant que du dioxyde de carbone (101) issu des fumées (308) soit fourni à l'unité électrocatalytique (W), de préférence dans lequel au moins une deuxième partie du mélange (209) du premier courant de produit appauvri (205) est fournie à l'unité d'oxydation catalytique (M).

15. Procédé de conversion de dioxyde de carbone selon l'une quelconque des revendications précédentes, dans lequel une autre partie (313) du dioxyde de carbone issu des fumées (308) est introduite dans la chambre de combustion (K), de préférence dans lequel le rapport entre l'autre partie (313) du dioxyde de carbone issu des fumées (308) qui est introduite dans la chambre de combustion (K) et la partie (101) du dioxyde de carbone issu des fumées (308) qui est introduite dans l'unité électrocatalytique (W) est > 0 et < 99, mieux encore > 0,5 et < 70 et idéalement > 0,5 et < 50.
